# EUROPÄISCHE PATENTSCHRIFT

(11) **EP 2 308 641 B1**
(45) Veröffentlichungstag und Bekanntmachung des Hinweises auf die Patenterteilung: **30.05.2012**
(21) Anmeldenummer: 10186375.1
(22) Anmeldetag: 04.10.2010
(51) Int. Cl.: B23Q 17/22, B23Q 17/24, G01B 21/04

(54) **Werkzeughalter zur Aufnahme eines zu vermessenden Werkzeugs sowie Messanordnung und Verfahren zu deren Kalibrierung**
Tool holder for holding a tool for its measurement and measuring arrangement and method for its calibration
Support d'outil destiné à la réception d'un outil devant être mesuré ainsi qu'agencement de mesure et procédé destiné au calibrage de celui-ci

(30) Priorität: 08.10.2009 DE 102009044206
(43) Veröffentlichungstag der Anmeldung: 13.04.2011
(73) Patentinhaber: NT Tool Corporation, Takahawa City Aichi 444-1386 (JP)
(72) Erfinder: Esaka, Shuichi, Kariya-City Aichi 448-0813 (JP); Kubo, Shinji, Takahama-City Aichi 444-1323 (JP); Fukagawa, Katsutoshi, Chiryu-City Aichi 478-0054 (JP)
(74) Vertreter: Engel, Christoph Klaus

(56) Entgegenhaltungen:
- EP-A1- 1 834 730
- WO-A1-03/002298
- US-B1- 6 301 007

## Beschreibung

Die vorliegende Erfindung betrifft einen Werkzeughalter zur Aufnahme eines in einer Messanordnung zu vermessenden Werkzeugs. Bei dem Werkzeughalter kann es sich beispielsweise um eine Spindel oder um einen in eine solche Spindel einzusetzenden Adapter eines Werkzeugvoreinstellgeräts handeln. Im Weiteren betrifft die Erfindung eine Messanordnung zur Vermessung von Werkzeugen sowie ein Verfahren zur Kalibrierung einer solchen Messanordnung auf einen Werkzeugnullpunkt.

Die DE 101 24 275 B4 zeigt ein Verfahren und eine Messeinrichtung zum Vermessen von Werkzeugen. Die Messeinrichtung umfasst einen Grundkörper mit einer Aufnahmeeinrichtung zur Aufnahme eines zu vermessenden Werkzeugs und einen am Grundkörper angebrachten Koordinatenschlitten, welcher das auf das Werkzeug auszurichtende Vermessungssystem trägt. Das Vermessungssystem umfasst Kamerasysteme mit angeschlossenen Einheiten zur Bildverarbeitung. Die gezeigte Lösung betrifft insbesondere Messeinrichtungen, bei denen mehrere Adapter zur lagedefinierten Anordnung der Werkzeuge in der Messeinrichtung benutzt werden, um mehrere ggf. unterschiedlich geartete Werkzeuge in der Messeinrichtung vermessen zu können. Die Adapter umfassen jeweils ein Grundmodul sowie ein oder mehrere dem Grundmodul zugeordnete Einsatzmodule. Um ein Werkzeug vermessen zu können, welches mithilfe eines derartigen Adapters in das Messgerät eingesetzt ist, ist es erforderlich, vor oder nach der Messung einen eindeutigen Bezug zwischen dem Messkoordinatensystem des Messgerätes und einem werkzeugspezifischen Werkzeugkoordinatensystem herzustellen. Das Werkzeugkoordinatensystem weist einen so genannten logischen Nullpunkt auf, welcher von außen nicht erkennbar ist. Daher ist an den Einsatzmodulen jeweils ein Hilfsnullpunkt vorhanden, der auch als Eichkante bezeichnet wird (eigentlich handelt es sich um eine Kalibrierkante). Der Hilfsnullpunkt ist durch Hilfskoordinaten definiert, die einerseits den radialen Versatz zwischen dem Hilfsnullpunkt und der Rotationsachse und andererseits den axialen Versatz zwischen dem Hilfsnullpunkt und dem logischen Nullpunkt angeben. Die technische Ausführung der als Hilfsnullpunkt bezeichneten "Eichkante" ist nicht näher beschrieben, sondern lediglich durch ein Fadenkreuzsymbol in der Zeichnung dargestellt.

Die DE 10 2004 018 968 A1 betrifft ebenfalls die in der DE 101 24 275 B4 gezeigte Messeinrichtung zum Vermessen von Werkzeugen. Es wird u. a. vorgeschlagen, die Hilfskoordinaten als Modulinformation aus einem zweidimensional strukturierten, optisch erfassbaren Datenträger auszulesen.

Die DE 10 2006 011 814 A1 (EP-1834730A1) zeigt ein Werkzeugmessgerät zur Vermessung eines Werkzeugs in einem Werkzeughalter gemäß dem Oberbegriff des Anspruchs 1. Der Werkzeughalter weist einen logischen Nullpunkt auf, der hier als Halterpunkt bezeichnet ist. Auch weist der Werkzeughalter einen Hilfsnullpunkt auf, der hier als Messpunkt bezeichnet ist. Der Messpunkt ist durch zwei in metallischen Mulden des Werkzeughalters befestigte Kugeln gebildet, die horizontal und vertikal zueinander versetzt angeordnet sind. Dieser Messpunkt dient der Kalibrierung des Werkzeugmessgerätes auf den jeweils verwendeten Werkzeughalter und wird auch als Kalibriermerkmal bezeichnet.

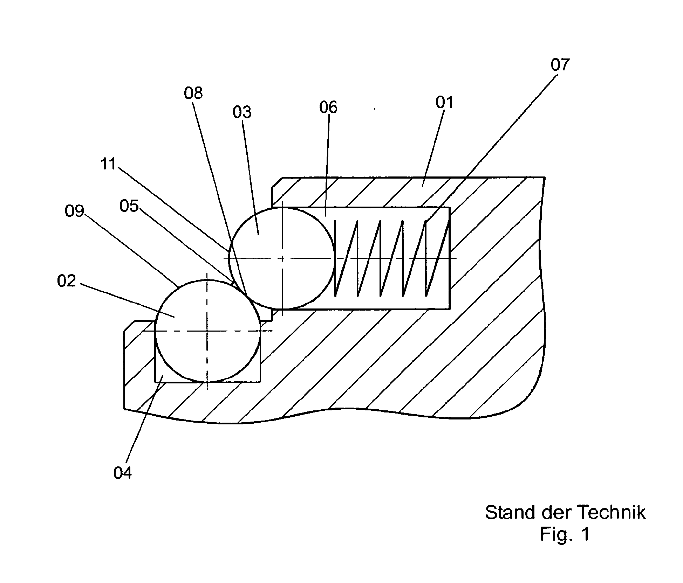

Fig. 1 zeigt ein Kalibriermerkmal gemäß dem Stand der Technik in einer Detailansicht. Hierbei handelt es sich um ein Kalibriermerkmal, wie es beispielsweise bei der in der DE 10 2006 011 814 A1 gezeigten Lösung verwendet wird. Das

Kalibriermerkmal ist an einer oberen äußeren Kante eines Werkzeughalters 01 angeordnet. Bei dem Werkzeughalter 01 kann es sich beispielsweise um eine Spindel oder um einen auf einer Spindel montierten Adapter handeln. Das Kalibriermerkmal umfasst eine erste Kugel 02 und eine zweite Kugel 03, die gleich ausgeführt sind. Die erste Kugel 02 befindet sich in einer ersten zylinderförmigen Ausnehmung 04 im Werkzeughalter 01. Die zweite Kugel 03 befindet sich in einer zweiten zylinderförmigen Ausnehmung 06 im Werkzeughalter 01 und wird durch eine Feder 07 gegen die erste Kugel 02 gepresst, sodass sich die erste Kugel 02 und die zweite Kugel 03 in einem Berührungspunkt 08 berühren. Zwischen den zwei Kugeln 02, 03 und ggf. auch in den zylinderförmigen Ausnehmungen 04, 06 ist Klebstoff 05 angebracht, um die Kugeln dauerhaft zu fixieren.

Die zweite Kugel 03 ist versetzt zur ersten Kugel 02 angeordnet. Der horizontale Versatz und der vertikale Versatz des Mittelpunktes der zweiten Kugel 03 gegenüber dem Mittelpunkt der ersten Kugel 02 ist jeweils vom Radius der beiden Kugeln 02, 03 abhängig. Folglich ist eine gedachte Verbindungslinie zwischen den Mittelpunkten der beiden Kugeln 02, 03 in einem Winkel von 45° gegenüber der Horizontalen und in einem Winkel von 45° gegenüber der Vertikalen geneigt.

Jeweils nur ein Teil der Oberfläche der beiden Kugeln 02, 03 bildet einen Abschnitt der Außenfläche des Kalibriermerkmals, da die beiden Kugeln 02, 03 in die beiden Ausnehmungen 04, 06 eingelassen sind. Die beiden Kugeln 02, 03 sind jeweils so tief in die beiden Ausnehmungen 04, 06 eingelassen, dass nur je etwa 25% des Kugelumfangs für die Bildaufnahme zur Verfügung stehen. Auch der verwendete Klebstoff 05 schränkt die optisch antastbare Kreiskontur ein.

Das Kalibriermerkmal ist für eine optische Erfassung vorgesehen, wobei insbesondere eine erste kreisbogenförmige Außenkante 09 der ersten Kugel 02 und eine zweite kreisbogenförmige Außenkante 11 der zweiten Kugel 03 der optischen Erfassung dienen. Dabei können insbesondere nur diejenigen Abschnitte der beiden kreisbogenförmigen Außenkanten 09, 11 erkannt werden, die eine äußere Kontur des Kalibriermerkmals bilden. Die äußeren Konturen der beiden Kugeln 02, 03 reichen jeweils von nahe dem Übergang zu den beiden Ausnehmungen 04, 06 im Werkzeughalter 01 bis nahe dem Berührungspunkt 08 zwischen den beiden Kugeln 02, 03. Folglich beträgt der Mittelpunktswinkel der beiden kreisbogenförmigen konturbildenden Außenkanten 09, 11 jeweils nur etwa 95°. Dieser begrenzte Mittelpunktswinkel führt dazu, dass die Position der beiden Kugeln 02, 03 optisch nur begrenzt genau erfassbar ist. Die zu erfassenden kreisbogenförmigen konturbildenden Außenkanten 09, 11 befinden sich in unterschiedlichen Abständen zur optischen Achse eines optischen Messsystems zur optischen Erkennung des Kalibriermerkmals und unterliegen daher unterschiedlichen Fehlern der optischen Abbildung. Diese optischen Fehler lassen sich nur begrenzt korrigieren und beeinflussen die Vermessung des Kalibriermerkmals daher negativ.

Das durch die beiden Kugeln 02, 03 gebildete Kalibriermerkmal weist im Bereich ihres gemeinsamen Berührungspunktes 08 sowie an den Übergängen zum Werkzeughalter 01 schwer zugängliche Bereiche auf, die besonders anfällig für Schmutz sind und eine Reinigung nur begrenzt zulassen. Der dort verbleibende Schmutz führt zu Ungenauigkeiten bei der optischen Erkennung des Kalibriermerkmals.

Zur Herstellung des Kalibriermerkmals müssen die beiden Ausnehmungen 04, 06 und die beiden Kugeln 02, 03 exakt zueinander angeordnet sein, wodurch die Herstellung des Kalibriermerkmals aufwändig ist und das Kalibriermerkmal anfällig gegen-Beschädigungen ist.

Die Aufgabe der vorliegenden Erfindung besteht ausgehend vom Stand der Technik darin, einen Werkzeughalter zur Aufnahme eines in einer Messanordnung zu vermessenden Werkzeugs bereitzustellen, der mithilfe eines verbesserten Kalibriermerkmals eine genauere Kalibrierung der Messanordnung auf den Werkzeughalter ermöglicht. Im Weiteren sind eine derartige Messanordnung und ein geeignetes Verfahren zu deren Kalibrierung bereitzustellen.

Die genannte Aufgabe wird durch einen Werkzeughalter gemäß dem beigefügten Anspruch 1 gelöst. Die Aufgabe wird weiterhin durch eine Messanordnung gemäß dem beigefügten nebengeordneten Anspruch 3 und durch ein Verfahren zur Kalibrierung einer Messanordnung gemäß dem beigefügten nebengeordneten Anspruch 4 gelöst.

Der erfindungsgemäße Werkzeughalter dient zur Aufnahme eines in einer Messanordnung zu vermessenden Werkzeugs. Bei der Messanordnung kann es sich vorzugsweise um ein Werkzeugvoreinstellungsgerät handeln, in welchem Bearbeitungswerkzeuge, wie Bohrer oder Fräswerkzeuge vermessen werden können. Bei dem Werkzeughalter kann es sich beispielsweise um eine Spindel oder einen in eine solche Spindel einzusetzenden Adapter handeln. Der Werkzeughalter umfasst zunächst einen rotationssymmetrischen einspannbaren Grundkörper, dessen Symmetrieachse eine vertikale Achse des Werkzeughalters definiert. Bei den üblichen Ausführungen von Messanordnungen zur Vermessung von Werkzeugen ist die Symmetrieachse des Grundkörpers des Werkzeughalters in der Messanordnung vertikal angeordnet, wobei während der Vermessung des Werkzeugs der Werk zeughalter zeitweise um die Symmetrieachse gedreht wird. Daher werden die Richtungen vertikal und horizontal nachfolgend in Bezug auf derartige übliche Messanordnungen verstanden. Wird der Werkzeughalter im Zusammenhang mit besonderen Ausführungen von Messanordnungen verwendet, bei denen beispielsweise der Werkzeughalter bezogen auf die Symmetrieachse seines Grundköpers geneigt eingespannt wird, so sind die Richtungen vertikal und horizontal in Bezug auf die geneigte Einspannung zu verstehen.

Dem Werkzeughalter ist ein Werkzeugnullpunkt zugeordnet, welcher einen Bezugspunkt des aufzunehmenden Werkzeugs darstellt. Derartige Werkzeugnullpunkte bilden jeweils den Koordinatenursprung des Werkzeugkoordinatensystems und werden verwendet, um beispielsweise geometrische Positionsdaten von Schneidwerkzeugen, wie die Position einer Schneide anzugeben. Der Werkzeugnullpunkt befindet sich üblicherweise im Inneren des Werkzeuges beziehungsweise im Inneren des Werkzeughalters und ist daher von außen nicht sichtbar und somit nicht optisch zu vermessen. Der Werkzeugnullpunkt liegt üblicherweise auf der Symmetrieachse des Werkzeughalters. Der Werkzeughalter umfasst weiterhin ein von außen erkennbares Kalibriermerkmal, welches einen horizontalen Abstand und einen vertikalen Abstand zum Werkzeugnullpunkt aufweist. Das Kalibriermerkmal dient dazu, die Messanordnung indirekt auf den Werkzeugnullpunkt zu kalibrieren. Der horizontale Abstand und der vertikale Abstand des Kalibriermerkmals zum Werkzeugnullpunkt müssen dazu vor der Kalibrierung bekannt sein. So werden der horizontale Abstand und der vertikale Abstand zumeist vom Hersteller derartiger Werkzeughalter angegeben, z. B. auf einem Typenschild auf dem Werkzeughalter.

Das Kalibriermerkmal weist in einer vertikalen Ebene, die den Werkzeugnullpunkt enthält, eine kreisbogenförmige, konturbildende Außenkante auf, deren Mittelpunktswinkel größer als 135° ist. Folglich ist das Kalibriermerkmal aus einer Blickrichtung, die senkrecht zum horizontalen Abstand und senkrecht zum vertikalen Abstand ist, anhand seiner kreisbogenförmigen, konturbildenden Außenkante erkennbar, sodass in dieser Ansicht der vertikale und der horizontale Abstand des Kalibriermerkmals vom Werkzeugnullpunkt messbar sind. Im Gegensatz zum Stand der Technik beträgt der Mittelpunktswinkel der Kreisbogenform der konturbildenden Außenkante nicht lediglich etwa 90° oder auch nahezu 135°, sondern mehr als 135°, was mehr als einem 3/4 eines gestreckten Winkels entspricht. Daher kann der Mittelpunkt der Kreisbogenform deutlich genauer als gemäß dem Stand der Technik ermittelt werden, wodurch der vertikale Abstand und der horizontale Abstand des Kalibriermerkmals gegenüber dem Werkzeugnullpunkt mit einer erhöhten Sicherheit und mit einer erhöhten Genauigkeit erkannt und gemessen werden können. Der vergrößerte Mittelpunktswinkel der kreisbogenförmigen konturbildenden Außenkante ist einfach dadurch realisierbar, dass das Kalibriermerkmal durch genau eine einzige Kugel gebildet ist. Es können aber auch andere geometrische Formen, wie beispielsweise Ellipsoid-Formen, die zu der kreisbogenförmigen konturbildenden Außenkante mit einem Mittelpunktswinkel von mehr als 135° führen, verwendet werden. Im Gegensatz zum Stand der Technik ist eine zweite Kugel nicht erforderlich.

Ein besonderer Vorteil des beschriebenen Werkzeughalters besteht darin, dass das vereinfachte und gleichzeitig bezogen auf die optische Abtastung verbesserte Kalibriermerkmal eine erhöhte Genauigkeit bei der Kalibrierung einer Messanordnung auf den Werkzeughalter erlaubt und somit eine erhöhte Genauigkeit bei der Vermessung eines von dem Werkzeughalter aufzunehmenden Werkzeugs ermöglicht ist.

Die Kreisbogenform der konturbildenden Außenkante schneidet eine einen horizontalen Radius der Kreisbogenform umfassende Gerade in einem ersten Schnittpunkt und eine einen vertikalen Radius der Kreisbogenform umfassende Gerade in einem zweiten Schnittpunkt. Folglich weist die Kreisbogenform der konturbildenden Außenkante eine horizontale und eine vertikale Tangente auf. Dadurch ist gewährleistet, dass der Mittelpunkt der Kreisbogenform und somit die Position des Kalibriermerkmals besonders genau in Bezug auf den vertikalen Abstand und gleichzeitig besonders genau in Bezug auf den horizontalen Abstand zum Werkzeugnullpunkt ermittelt werden können.

Die Kreisbogenform der konturbildenden Außenkante ist durch einen Halbkreis oder einen nahezu vollständigen Halbkreis gebildet. Folglich beträgt der Mittelpunktswinkel der Kreisbogenform der konturbildenden Außenkante 180° oder nahezu 180°, beispielsweise mindestens 170°. Die Symmetrieachse des Halbkreises, in welcher auch der zum Mittelpunkt des Halbkreisbogenumfangs zugehörige Radius liegt, ist jeweils mindestens 10° gegenüber dem horizontalen Radius und gegenüber dem vertikalen Radius geneigt, sodass gewährleistet ist, dass beide Koordinaten des Mittelpunkts des Halb Halbkreises besonders genau ermittelt werden können. Besonders bevorzugt ist die Halbkreisbogenform um 45° gegenüber dem horizontalen Radius und gegenüber dem vertikalen Radius geneigt, sodass in horizontaler und in vertikaler Richtung gleiche Genauigkeiten erzielt werden.

Das Kalibriermerkmal ist besonders bevorzugt durch eine Kugel gebildet, die zur Hälfte in eine Oberfläche des Werkzeughalters eingelassen ist. Diese Oberfläche ist bevorzugt 45° zu dem horizontalen Radius der Kreisbogenform geneigt. Folglich beträgt die Neigung der Oberfläche ebenfalls 45° zu dem vertikalen Radius der Kreisbogenform. Bei dieser Ausführungsform des Werkzeughalters bildet die Hälfte der Kugeloberfläche eine äußere Oberfläche des Kalibriermerkmals. Bei einer optischen Aufnahme der Kugel ist diese durch eine halbkreisbogenförmige konturbildende Außenkante erkennbar. Der Halbkreis weist eine Symmetrieachse auf, die 45° gegenüber der Horizontalen und 45° gegenüber der Vertikalen geneigt ist.

Die Kugel ist bevorzugt fest mit einem koaxial zur Kugel angeordneten Stift verbunden, der in einer zylinderförmigen Ausnehmung im Werkzeughalter sitzt. Hierdurch ist ein fester Sitz der Kugel im Werkzeughalter gewährleistet.

Die Kugel besteht bevorzugt aus einem Rubin, welcher seine Form dauerhaft beibehält. Die Kugel kann aber bevorzugt auch aus Keramik, Hartmetall oder Stahl gefertigt sein. Bedeutsam ist, dass die Kugel eine sehr geringe Formabweichung aufweist.

Die erfindungsgemäße Messanordnung dient zur Vermessung von Werkzeugen, vorzugsweise innerhalb eines Werkzeugvoreinstellungsgerätes, in welchem Bearbeitungswerkzeuge, wie Bohrer oder Fräswerkzeuge vermessen werden können. Die Messanordnung umfasst zunächst einen erfindungsgemäßen Werkzeughalter zur Aufnahme des zu vermessenden Werkzeugs. Der Werkzeughalter ist mit seinem Grundkörper innerhalb der Messanordnung eingespannt, beispielsweise in eine drehbare Spindel. Der Werkzeughalter ist derart eingespannt, dass er um die Symmetrieachse seines Grundkörpers rotieren kann. Die Messanordnung umfasst weiterhin ein optisches Messmittel zur Vermessung des vom Werkzeughalter aufzunehmenden Werkzeugs. Das optische Messmittel kann beispielsweise eine bewegbare Kamera umfassen, deren Ausgangssignal durch einen programmierbaren Rechner mithilfe von Methoden der Bilderverarbeitung ausgewertet wird. Das optische Messmittel ist beispielsweise dazu geeignet, die Schneide eines Schneidwerkzeuges auszumessen.

Das erfindungsgemäße Verfahren dient der Kalibrierung einer erfindungsgemäßen Messanordnung auf den Werkzeugnullpunkt. Das Verfahren umfasst zunächst einen Schritt, bei welchem ein vordefiniertes horizontales Kalibriermaß erfasst wird, welches den horizontalen Abstand des Kalibriermerkmals vom Werkzeugnullpunkt repräsentiert. In gleicher Weise wird ein vordefiniertes vertikales Kalibriermaß erfasst, welches den vertikalen Abstand des Kalibriermerkmals vom Werkzeugnullpunkt repräsentiert. Im einfachsten Fall sind das horizontale und das vertikale Kalibriermaß gleich dem horizontalen und dem vertikalen Abstand zwischen dem Kalibriermerkmal und dem Werkzeugnullpunkt. Das horizontale und das vertikale Kalibriermaß können aber auch von weiteren Größen abhängig sein.

In vielen Fällen sind das horizontale und das vertikale Kalibriermaß vorbekannt, beispielsweise dadurch, dass sie von einem Typenschild auf den durch eine Spindel oder durch einen Adapter gebildeten Werkzeughalter abgelesen werden können. In einem solchen Fall sind für das Verfahren das horizontale und das vertikale Kalibriermaß abzulesen und für die weiteren Schritte bereitzuhalten, beispielsweise dadurch, dass sie in einen Rechner der Messanordnung eingegeben werden. Das Erfassen des horizontalen und des vertikalen Kalibriermaßes kann auch automatisiert erfolgen, beispielsweise dadurch, dass ein optisch erfassbarer Datenträger ausgelesen wird, in welchem das horizontale und das vertikale Kalibriermaß abgespeichert sind.

In einem weiteren Schritt des Verfahrens ist das optische Messmittel auf das Kalibriermerkmal auszurichten. Dies kann beispielsweise dadurch erfolgen, dass eine Kamera so ausgerichtet wird, dass sich das Kalibriermerkmal im Bild der Kamera befindet. Hierbei ist eine optische Achse der Kamera senkrecht zu dem horizontalen Abstand und senkrecht zu dem vertikalen Abstand des Kalibriermerkmals vom Werkzeugnullpunkt ausgerichtet. In einem weiteren Schritt des Verfahrens erfolgt eine genaue Ausrichtung des optischen Messmittels in der Form, dass eine optische Achse des optischen Messmittels auf den Mittelpunkt der Kreisbogenform der Außenkante des Kalibriermerkmals ausgerichtet wird. Infolgedessen befindet sich der Mittelpunkt der Kreisbogenform der konturbildenden Außenkante des Kalibriermerkmals auf der optischen Achse des Messmittels.

In einem weiteren Schritt werden eine horizontale Position und eine vertikale Position des Mittelpunktes der Kreisbogenform des Kalibriermerkmals aus Messwerten der optisch erkannten Außenkante des Kalibriermerkmals berechnet. Hierfür sind geeignete Verfahren der Bildverarbeitung anzuwenden, welche dem Fachmann bekannt sind.

In einem weiteren Schritt des Verfahrens wird ein den Werkzeugnullpunkt repräsentierender Koordinatenursprung berechnet. Hierfür ist zum einen eine Differenz zwischen der horizontalen Position des Mittelpunktes der Kreisbogenform des Kalibriermerkmals und dem horizontalen Kalibriermaß zu bilden.

Zum anderen ist eine Differenz zwischen der vertikalen Position des Mittelpunktes der Kreisbogenform des Kalibriermerkmals und dem vertikalen Kalibriermaß zu bilden.

Im Ergebnis des beschriebenen Verfahrens liegt ein Koordinatenursprung vor, der als Bezugspunkt zum Vermessen des Werkzeuges dient. Durch das Verfahren ist sichergestellt, dass dieser Koordinatenursprung in einem hohen Maß an Genauigkeit den Werkzeugnullpunkt repräsentiert, der zur geometrischen Beschreibung des Werkzeuges als Referenzpunkt dient. Das Verfahren erlaubt es, dass der Werkzeughalter, der beispielsweise durch einen in eine Spindel einzusetzenden Adapter gebildet ist, ausgetauscht werden kann, ohne dass Einschränkungen in der Genauigkeit bei der Vermessung eines Werkzeuges zu erwarten sind.

Ein besonderer Vorteil des beschriebenen Verfahrens zur Kalibrierung der Messanordnung besteht darin, dass die optische Achse des optischen Messmittels auf den Mittelpunkt einer Kreisform gerichtet ist, wodurch die Kreisbogenform der Außenkante des Kalibriermerkmals mit einer äußerst hohen Genauigkeit optisch erfasst werden kann. Optische Abbildungsfehler, die von der Entfernung zum Bildmittelpunkt abhängig sind, werden hierdurch egalisiert.

Bei einer bevorzugten Ausführungsform des Verfahrens umfasst dieses weiterhin Schritte zur Prüfung der Plausibilität des vordefinierten horizontalen Kalibriermaßes und des vordefinierten vertikalen Kalibriermaßes. Diese Ausführungsform des Verfahrens ist insbesondere zur Kalibrierung von erfindungsgemäßen Messanordnungen geeignet, bei welchen der Werkzeughalter durch einen Adapter gebildet ist, der von einer Spindel aufgenommen wird. Die Spindel weist ebenfalls ein Kalibriermerkmal auf, sodass der Werkzeugnullpunkt auch anhand dieses Kalibriermerkmals ermittelt werden kann. Zur Durchführung dieser Ausführungsform des erfindungemäßen Verfahrens ist zunächst der auf diese Weise bestimmbare Werkzeugnullpunkt zu ermitteln. Hierfür kann beispielsweise das erfindungsgemäße Verfahren durchgeführt werden. Es kann aber auch ein Kalibriermerkmal gemäß dem Stand der Technik genutzt werden. In vielen Anwendungsfällen ändert sich der so bestimmbare Werkzeugnullpunkt nicht, da die Spindel fest eingebaut ist. Folglich kann auf abgespeicherte Werte für den Werkzeugnullpunkt zurückgegriffen werden. Um den Werkzeugnullpunkt, der ausgehend vom Kalibriermerkmal des Adapters ermittelt wurde, auf dessen Plausibilität zu prüfen, werden die Differenzen zwischen den Koordinaten des ausgehend vom Kalibriermerkmal der Spindel ermittelten Werkzeugnullpunkts und den Koordinaten des ausgehend vom Kalibriermerkmal des Adapters ermittelten Werkzeugnullpunkts errechnet. Insofern eine der Differenzen ein vordefiniertes zulässiges Toleranzmaß überschreitet, wird eine Meldung ausgegeben, die signalisiert, dass ein Fehler vorliegt. Alternativ oder ergänzend wird eine Meldung ausgegeben, wenn keine der Differenzen das vordefinierte zulässige Maß überschreitet, um zu signalisieren, dass der Adapter korrekt in der Spindel sitzt. Ein Fehler ergibt sich beispielsweise, wenn sich beim Einsetzen des Adapters in die Spindel Späne oder Staub zwischen dem Adapter und der Spindel befinden. Ein Fehler kann aber auch dann vorliegen, wenn die vordefinierten horizontalen und vertikalen Kalibriermaße nicht korrekt erfasst wurden. Bei dieser Ausführungsform des Verfahrens werden Folgekosten, die durch eine fehlerhafte Kalibrierung entstehen können, vermieden.

Bei einer weiteren bevorzugten Ausführungsform des Verfahrens umfasst dieses weiterhin Schritte zur Prüfung der Richtigkeit der Kalibrierung der Messanordnung. Bei dieser Ausführungsform des Verfahrens werden zunächst ein oder mehrere weitere geometrische Merkmale des Kalibriermerkmals ausgewählt. Bei diesen Merkmalen sind die Eigenschaften derselben vorbekannt. Bei den geometrischen Merkmalen kann es sich beispielsweise um eine geometrische Form handeln, deren Ausmaße oder Charakteristika als Eigenschaften vorbekannt sind. In einem weiteren Schritt werden die Eigenschaften der ausgewählten Merkmale des Kalibriermerkmals gemessen. Es werden die gemessenen Eigenschaften mit den vorbekannten Eigenschaften der Merkmale verglichen. Es wird eine Meldung ausgegeben, wenn die gemessene Eigenschaft wenigstens eines der Merkmale um mehr als ein vordefiniertes zulässiges Maß von der vorbekannten Eigenschaft des entsprechenden der Merkmale abweicht. Diese Ausführungsform des Verfahrens erlaubt es, beispielsweise Verschmutzungen und Deformationen des Kalibriermerkmals zu erkennen und daraus resultierende Fehler zu vermeiden. Es wird geprüft, ob das erkannte Kalibriermerkmal dem erwarteten Kalibriermerkmal entspricht oder ob eine Verwechslung der Werkzeughalters vorliegt. Das vordefinierte zulässige Maß kann beispielsweise durch eine Anwendungssoftware einstellbar sein. Ein besonderer Vorteil dieser Ausführungsform des Verfahrens besteht darin, dass Folgekosten, die durch eine fehlerhafte Kalibrierung oder durch die Verwendung eines falschen Adapters entstehen können, vermieden werden. Der Bediener der Messanordnung wird durch die Meldung darauf hingewiesen, dass ein Fehler vorliegt.

Eine weitere Ausführungsform des Verfahrens umfasst ergänzende Schritte, die während der Vermessung eines zu vermessenden Werkzeuges erfolgen und der Gewährleistung der Messgenauigkeit dienen und folglich auch dem Ziel der Kalibrierung zuträglich sind. Diese Schritte dienen der Prüfung der Drehzahl eines den Werkzeughalter bildenden Adapters, insbesondere, wenn der Adapter durch ein manuelles Drehen einer den Adapter aufnehmenden Spindel gedreht wird. Bei dieser Ausführungsform wird die Drehzahl permanent gemessen, während die Spindel gedreht wird. Es wird eine Meldung ausgegeben, wenn die gemessene Drehzahl ein vordefiniertes Maß für eine maximal zulässige Drehzahl überschreitet. Die bei unzulässiger Drehzahl aufgenommenen Messwerte werden ausgesondert und können neu aufgenommen werden. Bei dieser Ausführungsform des Verfahrens werden Messwerte, die aufgrund einer zu schnellen Drehung des Werkzeugs eine zu hohe Messunsicherheit aufweisen, vermieden. Der Bediener, welcher die Spindel manuell dreht, muss die Spindel nicht unnötig langsam drehen, wodurch die Prüfzeit ohne Einschränkung der Präzision der Messung minimiert ist.

Eine weitere Ausführungsform des Verfahrens umfasst ergänzende Schritte, die ebenfalls während der Vermessung eines Werkzeuges ein hohes Maß an Genauigkeit bei der Vermessung des Werkzeuges gewährleisten, um die vor der Erfindung liegende Aufgabe ergänzend zu lösen. Auch diese Ausführungsform des Verfahrens ist insbesondere für Messanordnungen vorgesehen, bei denen der Werkzeughalter durch einen Adapter gebildet ist, der von einer drehbaren Spindel aufgenommen wird. Während der Vermessung des zu vermessenden Werkzeuges wird die Drehposition der Spindel permanent gemessen, insbesondere wenn die Spindel manuell gedreht wird. Während der Vermessung des Werkzeuges werden die Spindel und der darin aufgenommene Adapter von einer ersten Drehposition in eine zweite Drehposition manuell gedreht. Eine derartige Drehung ist beispielsweise dann erforderlich, wenn verschiedene Schneiden eines Fräswerkzeuges gemessen werden sollen. Das permanente Messen der Drehposition kann beispielsweise mithilfe eines Drehgebers erfolgen, welcher an die Drehachse der Spindel gekoppelt ist. Sobald die Spindel wieder die erste Drehposition einnehmen soll, werden die Spindel und der darin aufgenommene Adapter manuell von der zweiten Drehposition in Richtung der ersten Drehposition gedreht. Es wird eine Meldung ausgegeben, wenn die erste Drehposition erneut gemessen wird. Zu diesem Zweck können die Drehpositionen beispielsweise gespeichert werden. Alternativ kann die Drehposition permanent numerisch angezeigt werden, sodass der Benutzer die erste Drehposition anhand der die Meldung bildenden numerischen Ausgabe erkennen kann. Mithilfe dieser Ausführungsform des Verfahrens ist es möglich, eine bereits ermittelte Drehposition, bei welcher ein zu prüfendes Merkmal eine maximale Auslenkung aufweist, nach einer erfolgten manuellen Drehung der Spindel erneut einzustellen. Derartige Drehpositionen werden eingestellt, da den Messungen die Annahme zugrunde gelegt wird, dass bei der maximalen Auslenkung des zu prüfenden Merkmals der gültige Messwert gemessen wird. Es kann jedoch vorkommen, dass beispielsweise bei einem Wechsel der Drehrichtung vor Erreichen des Maximums ein falsches Maximum gemessen wird, was große Messfehler zur Folge haben kann. Auch kann es vorkommen, dass nicht alle Maxima, die beispielsweise mehrere Schneiden eines Fräswerkzeuges repräsentieren, aufgrund einer zu schnellen Drehung der Spindel gemessen werden. Zur Wiederholung der Messung müssen die Drehpositionen, bei welchen die Maxima auftreten, genau eingestellt werden. Mithilfe der gezeigten Ausführungsform des Verfahrens ist es möglich, die Drehpositionen, für die ein Maximum gemessen wurde, erneut genau einzustellen. Außerdem kann durch die Aufzeichnung der fortlaufenden Drehposition und Auswerten der Drehrichtung vermieden werden, dass durch versehentliches Wechseln der Drehrichtung ein nicht vorhandenes bzw. falsches Maximum einer Messung zugrunde gelegt wird.

Unter Bezugnahme auf die Zeichnung werden nachfolgend ein Kalibriermerkmal gemäß dem Stand der Technik sowie bevorzugte Ausführungsformen der Erfindung beschrieben. Es zeigen:
- Fig. 1:: ein Kalibriermerkmal mit zwei Kugeln gemäß dem Stand der Technik;
- Fig. 2:: eine bevorzugte Ausführungsform eines erfindungsgemä- ßen Werkzeughalters in Form eines Adapters;
- Fig. 3:: ein in Fig. 2 gezeigtes Kalibriermerkmal in einer Detailansicht;
- Fig. 4:: das in Fig. 3 gezeigte Kalibriermerkmal in einer Schnittansicht;
- Fig. 5:: das in Fig. 3 gezeigte Kalibriermerkmal mit Charakte- ristika für die Bildverarbeitung; und
- Fig. 6:: eine in Fig. 4 gezeigte Kugel in einer Detailansicht.

Fig. 1 zeigt ein Kalibriermerkmal mit zwei Kugeln gemäß dem Stand der Technik, welches in der Beschreibungseinleitung erörtert ist.

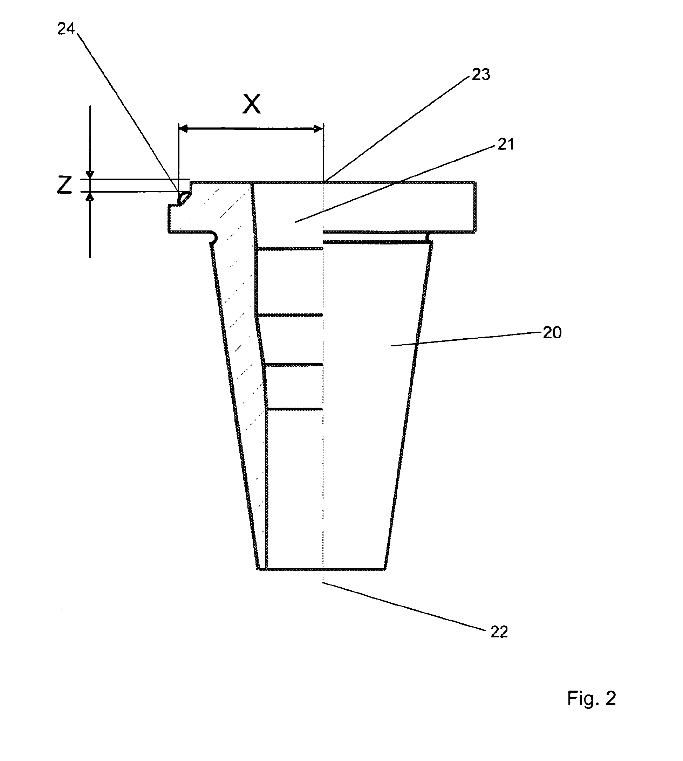

Fig. 2 zeigt eine bevorzugte Ausführungsform eines erfindungsgemäßen Werkzeughalters in Form eines Adapters. Der Adapter ist dafür vorgesehen, in eine drehbare Spindel eines Werkzeugvoreinstellgerätes (nicht gezeigt) eingespannt zu werden und ein zu vermessendes Werkzeug aufzunehmen. Der Adapter umfasst zunächst einen rotationssymmetrischen Grundkörper 20 der mit seiner Außenfläche in die Spindel einzuspannen ist. Der Grundkörper muss nicht zwangsläufig rotationssymmetrisch sein sondern kann beispielsweise auch als dreiseitiges Gleichdick ausgebildet sein.

Der rotationssymmetrische Grundkörper 20 weist einen inneren Hohlraum 21 auf, der ebenfalls rotationssymmetrisch ausgeführt ist und der Aufnahme des zu vermessenden Werkzeugs dient. Eine Symmetrieachse 22 des rotationssymmetrischen Grundkörpers 20 ist vorgesehen, eine Rotationsachse zu bilden, um welche der Adapter, die Spindel und das zu vermessende Werkzeug innerhalb der Messanordnung rotieren werden, um das Werkzeug zu vermessen. Die Symmetrieachse 22 des rotationssymmetrischen Grundkörpers 20 wird in der Messanordnung üblicherweise vertikal angeordnet.

Für den Adapter ist ein Werkzeugnullpunkt 23 definiert, welcher einen Bezugspunkt für das aufzunehmende Werkzeug darstellt. Der Werkzeugnullpunkt 23 bildet den Koordinatenursprung eines Werkzeugkoordinatensystems. Der Werkzeugnullpunkt 23 befindet sich auf der Symmetrieachse 22 in einer definierten Höhe, beispielsweise an der oberen Begrenzung des Adapters. Die Höhenlage des Werkzeugnullpunktes wird bei anderen Ausführungsformen durch die Werkzeugaufnahme bestimmt.

Der Adapter umfasst weiterhin ein Kalibriermerkmal 24, welches einen horizontalen Abstand X zum Werkzeugnullpunkt 23 und einen vertikalen Abstand Z zum Werkzeugnullpunkt 23 aufweist.

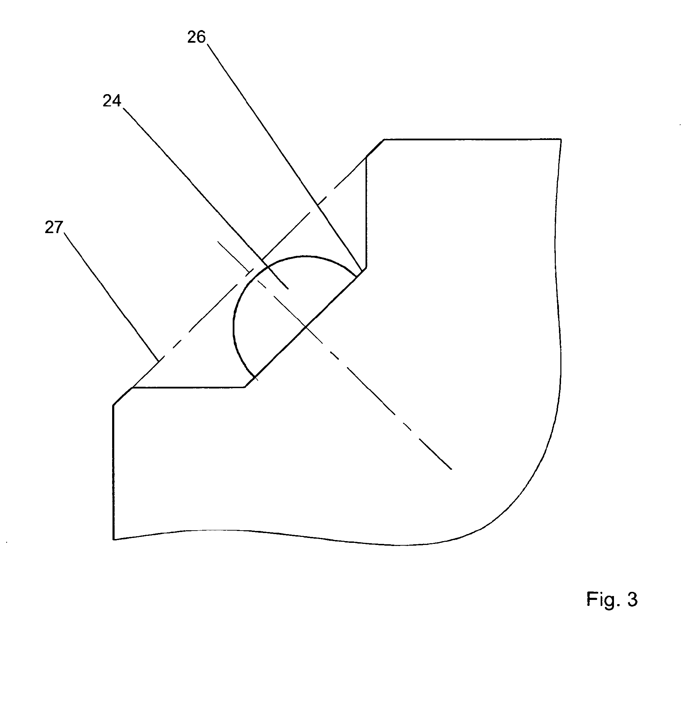

Fig. 3 zeigt das in Fig. 2 gezeigte Kalibriermerkmal 24 in einer Detailansicht. Das Kalibriermerkmal 24 ist durch eine Kugel gebildet, die aus einem Rubin gefertigt wurde. Die Kugel 24 ist bis zu ihrer Hälfte in eine Oberfläche 26 des Adapters eingelassen, die 45° zur Symmetrieachse 22 (gezeigt in Fig. 2) geneigt ist. Gleichzeitig ist die Oberfläche 26 auch 45° gegenüber der Horizontalen geneigt. Im Übrigen ist die geneigte Oberfläche 26 mit ihrer Außenfläche entgegen der Symmetrieachse 22 und in Richtung des einzuspannenden Werkzeugs ausgerichtet.

Die geneigte Oberfläche 26 und die Kugel 24 sind innerhalb einer Vertiefung einer Abschrägung 27 des Adapters angeordnet, wodurch die Kugel 24 u. a. vor groben mechanischen Einflüssen geschützt ist. Dennoch sind die Kugel 24 und der sie umgebende Bereich leicht zu reinigen.

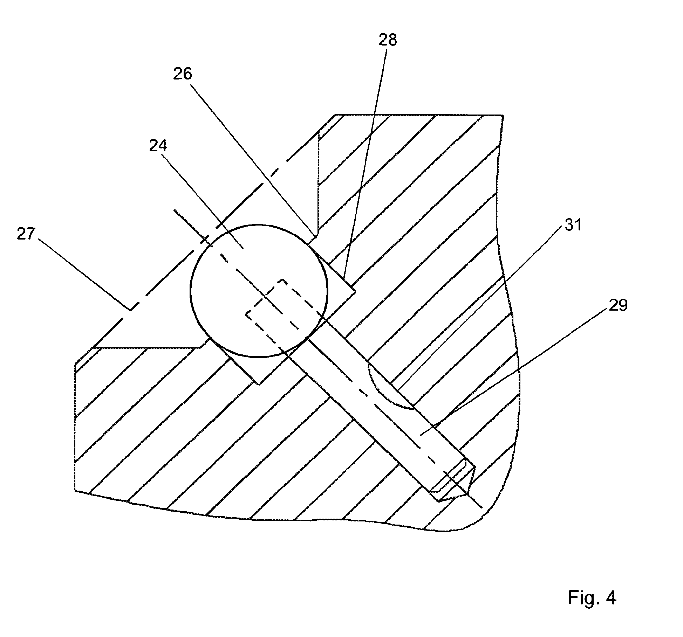

Fig. 4 zeigt das in Fig. 3 gezeigte Kalibriermerkmal 24 in einer Schnittdarstellung. Die Kugel 24 sitzt in einer zylinderförmigen Ausnehmung 28 im Adapter. Die Kugel 24 ist fest verbunden mit einem Befestigungsstift 29, welcher dazu in das Innere der Kugel 24 eingebracht ist. Der Mittelpunkt der Kugel 24 ist auf der Symmetrieachse des zylinderförmigen Befestigungsstiftes 29 angeordnet. Der Befestigungsstift 29 sitzt fest in einer zylinderförmigen Ausnehmung 31 im Adapter und gewährleistet, dass die Kugel 24 nicht aus der Ausnehmung 28 herausfallen kann. Der Befestigungsstift 29 besteht aus Stahl und kann beispielsweise dadurch in der Ausnehmung 31 befestigt sein, dass er in die Ausnehmung 31 eingeklemmt oder eingeklebt ist. Alternativ kann die Kugel 24 auch ohne einen Stift in der Ausnehmung 28 befestigt sein.

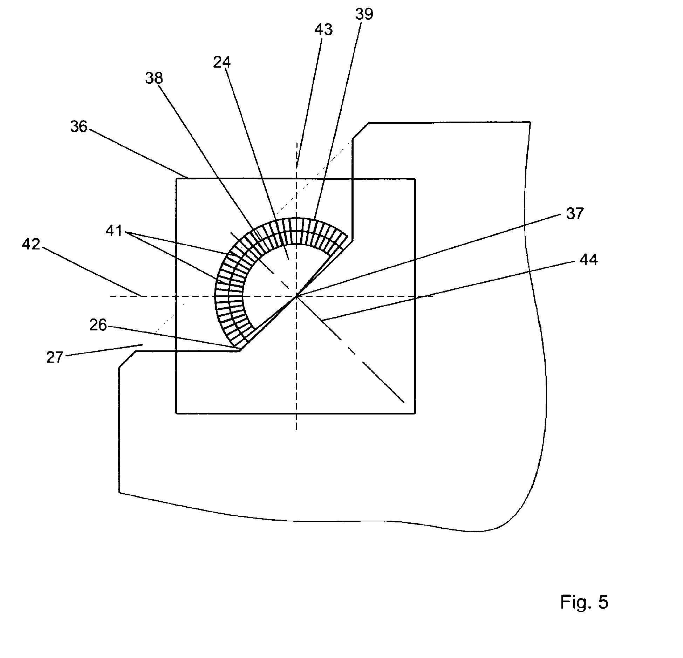

Fig. 5 zeigt das in Fig. 3 gezeigte Kalibriermerkmal 24 mit Charakteristika für die Bildverarbeitung, um die Position der Kugel 24 mithilfe von optischen Messverfahren innerhalb der Messanordnung zu bestimmen. Ein Rahmen 36 kennzeichnet den Bildausschnitt, wie er für die Bilderkennung zu verwenden ist. Die verwendete Kamera ist so einzustellen, dass das von ihr aufgenommene Bild den Rahmen 36 aufweist. In einem Mittelpunkt 37 des Rahmens 36, welcher den Bildmittelpunkt darstellt und auf der optischen Achse der Kamera liegt, ist infolge der Einstellung ebenfalls ein Mittelpunkt eines Halbkreises 38 angeordnet, welcher das Bild der sichtbaren Kontur der Kugel 24 darstellt. Ein für die Bilderkennung interessierender Bereich 39, der auch als Area of Interest bezeichnet wird, weist die Form eines Kreisbogenrings auf, welcher einen Mittelpunktswinkel von etwa 170° besitzt. Weiterhin sind Suchlinien 41 dargestellt, entlang derer bei der Bilderkennung der Halbkreis 38 gesucht wird.

Der Halbkreis 38, welcher die konturbildende Außenkante der Kugel 24 bildet, schneidet eine einen horizontalen Radius des Halbkreises 38 umfassende Gerade 42 und eine einen vertikalen Radius des Halbkreises 38 umfassende Gerade 43. Eine Symmetrieachse 44 des Halbkreises 38 ist jeweils um 45° gegenüber dem horizontalen Radius und gegenüber dem vertikalen Radius geneigt. Daher kann der Mittelpunkt des Halbkreises 38 mit gleicher Genauigkeit in Bezug auf die horizontale Richtung und in Bezug auf die vertikale Richtung ermittelt werden.

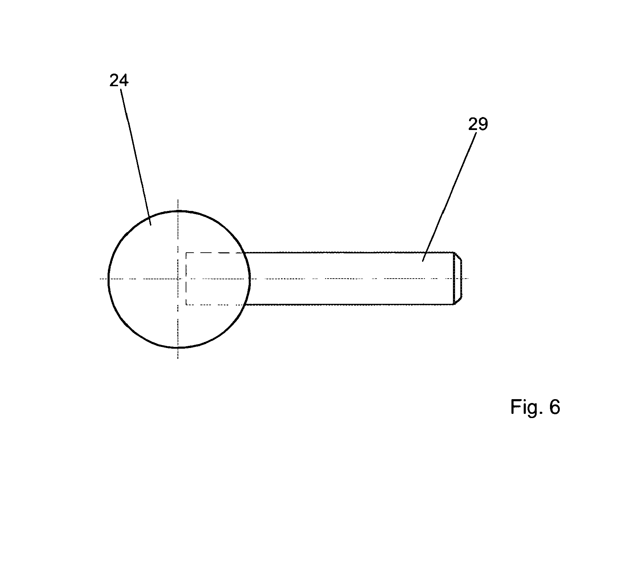

Fig. 6 zeigt die in Fig. 4 gezeigte Kugel 24 mit dem Befestigungsstift 29 in Alleinstellung. Die Kugel 24 besitzt einen Durchmesser von 4 mm. Der Befestigungsstift 29 besitzt einen Durchmesser von 1,5 mm. Die Länge der Anordnung bestehend aus der Kugel 24 und dem Befestigungsstift 29 beträgt 10 mm.

### Bezugszeichenliste:

- 01: Werkzeughalter
- 02: erste Kugel
- 03: zweite Kugel
- 04: erste zylinderförmige Ausnehmung
- 05: Klebstoff
- 06: zweite zylinderförmigen Ausnehmung
- 07: Feder
- 08: Berührungspunkt
- 09: erste kreisbogenförmige Außenkante
- 10: -
- 11: zweite kreisbogenförmige Außenkante
- 20: Grundkörper
- 21: innerer Hohlraum
- 22: Symmetrieachse
- 23: Werkzeugnullpunkt
- 24: Kalibriermerkmal (Kugel)
- 25: -
- 26: geneigte Oberfläche
- 27: Abschrägung
- 28: zylinderförmige Ausnehmung
- 29: Befestigungsstift
- 30: -
- 31: zylinderförmige Ausnehmung
- 36: Rahmen des aufgenommenen Bildes
- 37: Mittelpunkt
- 38: Halbkreis
- 39: Area of Interest
- 41: Suchlinien
- 42: horizontalen Radius umfassende Gerade
- 43: vertikalen Radius umfassende Gerade
- 44: Symmetrieachse des Halbkreises

## Patentansprüche

1. Werkzeughalter zur Aufnahme eines in einer Messanordnung zu vermessenden Werkzeugs, umfassend:
- einen einspannbaren Grundkörper (20), dessen Symmetrieachse(22) eine vertikale Achse des Werkzeughalters definiert;
- einen Werkzeugnullpunkt (23), der für das im Werkzeughalter aufzunehmende Werkzeug definiert ist; und
- ein Kalibriermerkmal (24), welches einen horizontalen Abstand und einen vertikalen Abstand zum Werkzeugnullpunkt (23) aufweist und in einer vertikalen den Werkzeugnullpunkt (23) enthaltenden Ebene eine kreisbogenförmige konturbildende Außenkante (38) aufweist, deren Mittelpunktswinkel größer als 135° ist, wobei die Kreisbogenform der konturbildenden Außenkante (38) eine einen horizontalen Radius der Kreisbogenform umfassende Gerade (42) in einem ersten Schnittpunkt und eine einen vertikalen Radius der Kreisbogenform umfassende Gerade (43) in einem zweiten Schnittpunkt schneidet;
**dadurch gekennzeichnet, dass** die Kreisbogenform der konturbildenden Außenkante durch einen Halbkreis (38) gebildet ist, dessen Symmetrieachse (44) jeweils mindestens 10° gegenüber dem horizontalen Radius und gegenüber dem vertikalen Radius geneigt ist.

2. Werkzeughalter nach Anspruch 1, **dadurch gekennzeichnet, dass** das Kalibriermerkmal durch eine Kugel (24) gebildet ist, die zur Hälfte in eine Oberfläche (26) des Werkzeughalters eingelassen ist, die 45° zu einem horizontalen Radius der Kreisbogenform der konturbildenden Außenkante (38) geneigt ist.

3. Messanordnung zur Vermessung von Werkzeugen, umfassend:
- einen Werkzeughalter nach Anspruch 1 oder 2, der mit seinem Grundkörper (20) in der Messanordnung eingespannt ist, wobei eine Rotation des Werkzeughalters um-seine Symmetrieachse (22) ermöglicht ist; und
- ein optisches Messmittel zur Vermessung des vom Werkzeughalter aufzunehmenden Werkzeugs.

4. Verfahren zur Kalibrierung einer Messanordnung nach Anspruch 3 auf den Werkzeugnullpunkt (23), die folgenden Schritte umfassend:
- Erfassen eines vordefinierten horizontalen Kalibriermaßes, welches den horizontalen Abstand des Kalibriermerkmals (24) vom Werkzeugnullpunkt (23) repräsentiert;
- Erfassen eines vordefinierten vertikalen Kalibriermaßes, welches den vertikalen Abstand des Kalibriermerkmals (24) vom Werkzeugnullpunkt (23) repräsentiert;
- Ausrichten des optischen Messmittels auf das Kalibriermerkmal (24);
- Ausrichten einer optischen Achse (37) des optischen Messmittels auf den Mittelpunkt der Kreisbogenform der konturbildenden Außenkante (38) des Kalibriermerkmals (24);
- Berechnen einer horizontalen Position und einer vertikalen Position des Mittelpunkts der Kreisbogenform des Kalibriermerkmals (24) aus Messwerten der optisch erkannten konturbildenden Außenkante (38);
- Berechnen eines den Werkzeugnullpunkt (23) repräsentierenden Koordinatenursprungs durch Bildung einer Differenz zwischen der horizontalen Position des Mittelpunktes der Kreisbogenform des Kalibriermerkmals (24) und dem horizontalen Kalibriermaß sowie einer Differenz zwischen der vertikalen Position des Mittelpunktes der Kreisbogenform des Kalibriermerkmals (24) und dem vertikalen Kalibriermaß.

5. Verfahren nach Anspruch 4, **dadurch gekennzeichnet, dass** es weiterhin die folgenden Schritte zur Prüfung der Plausibilität des vordefinierten horizontalen Kalibriermaßes und des vordefinierten vertikalen Kalibriermaßes eines den Werkzeughalter bildenden Adapters umfasst:
- Ermitteln des Werkzeugnullpunktes (23) durch die Kalibrierung auf ein Kalibriermerkmal einer den Adapter aufnehmenden Spindel;
- Berechnen der Differenzen zwischen den Koordinaten des ausgehend vom Kalibriermerkmal der Spindel ermittelten Werkzeugnullpunktes (23) und den Koordinaten des ausgehend vom Kalibriermerkmal (24) des Adapters ermittelten Werkzeugnullpunktes (23);
- Ausgabe einer Meldung, wenn eine der Differenzen ein vordefiniertes zulässiges Maß überschreitet.

6. Verfahren nach Anspruch 4 oder 5, **dadurch gekennzeichnet, dass** es weiterhin die folgenden Schritte zur Prüfung der Richtigkeit der Kalibrierung der Messanordnung umfasst:
- Auswählen von einem oder mehreren weiteren geometrischen Merkmalen des Kalibriermerkmales (24), deren Eigenschaften vorbekannt sind;
- Messen der Eigenschaften der ausgewählten Merkmale des Kalibriermerkmales (24);
- Vergleich der gemessenen Eigenschaften mit den vorbekannten Eigenschaften der Merkmale,
- Ausgabe einer Meldung, wenn die gemessene Eigenschaft mindestens eines der Merkmale um mehr als ein vordefiniertes zulässiges Maß von der vorbekannten Eigenschaft des entsprechenden der Merkmale abweicht.

7. Verfahren nach einem der Ansprüche 4 bis 6, **dadurch gekennzeichnet, dass** es weiterhin die folgenden Schritte zur Prüfung der Drehzahl eines den Werkzeughalter bildenden Adapters umfasst:
- Messen der Drehzahl einer den Adapter aufnehmenden manuell gedrehten Spindel;
- Ausgabe einer Meldung, wenn die gemessene Drehzahl ein vordefiniertes Maß für eine maximal zulässige Drehzahl überschreitet.

8. Verfahren nach einem der Ansprüche 4 bis 7, **dadurch gekennzeichnet, dass** es weiterhin die folgenden Schritte zur Bestimmung einer Drehposition eines den Werkzeughalter bildenden Adapters umfasst:
- permanentes Messen der Drehposition einer den Adapter aufnehmenden Spindel;
- manuelles Drehen der Spindel und des darin aufgenommenen Adapters von einer ersten Drehposition in eine zweite Drehposition;
- manuelles Drehen der Spindel und des darin aufgenommenen Adapters von der zweiten Drehposition in Richtung der ersten Drehposition;
- Ausgabe eine Meldung, wenn die erste Drehposition erneut gemessen wird.

## Claims

1. Tool holder for adapting a tool that is to be measured in a measuring arrangement, comprising:
- a fixable base body (20), whose symmetry axis (22) defines a vertical axis of the tool holder;
- a zero-point (23) of the tool which is defined for the tool that is to be mounted in the tool holder; and
- a calibration feature (24) which has a horizontal distance and a vertical distance to the zero-point (23) of the tool and which in a vertical level comprising the zero-point (23) of the tool comprises a circular arched contour forming outside edge (38), whose central angle is greater than 135°, whereas the circular arched of the contour forming outside edge (38) cuts a line (42) comprising a horizontal radius of the circular arch form in a first intersection point and cuts a line (43) comprising a vertical radius of the circular arch form in a second intersection point;
**characterized in that** the circular arch form of the contour forming outside edge is formed by a semicircle (38), whose symmetry axis (44) is inclined respectively at least 10° towards the horizontal radius and towards the vertical radius.

2. Tool holder according to claim 1, **characterized in that** the calibration feature is formed by a sphere (24), one half of which is inserted into a surface (26) of the tool holder, that surface is inclined 45° towards a horizontal radius of the circular arch of the contour forming outside edge (38).

3. Measuring arrangement for measuring of tools, comprising:
- a tool holder according to claim 1 or 2, which is fixed by its base body (20) in the measuring arrangement, whereas a rotation of the tool holder around its symmetry axis (22) is allowed; and
- an optical measuring device for measuring of tools to be inserted into the tool holder.

4. Method for calibration of a measuring arrangement according to claim 3 to the zero-point (23) of the tool, comprising the following steps:
- capturing of a predefined horizontal standard calibration measure, which represents the horizontal distance of the calibration feature (24) from the zero-point (23) of the tool;
- capturing of a predefined vertical standard calibration measure, which represents the vertical distance of the calibration feature (24) from the zero-point (23) of the tool;
- directing the optical measuring device to the calibration feature (24);
- directing an optical axis (37) of the optical measuring device to the central point of the circular arch form of the contour forming outside edge (38) of the calibration feature (24);
- calculating a horizontal position and a vertical position of the central point of the circular arch form of the calibration feature (24) based on data from the optically recognized contour forming outside edge (38);
- calculating a point of origin representing the zero-point (23) of the tool by calculating a difference between the horizontal position of the central point of the circular arch form of the calibration feature (24) and the horizontal standard calibration measure as well as a difference between the vertical position of the central point of the circular arch form of the calibration feature (24) and the vertical standard calibration measure.

5. Method according to claim 4, **characterized in that** it furthermore comprises the following steps for checking the plausibility of the predefined horizontal standard calibration measure and the predefined vertical standard calibration measure of an adapter forming the tool holder:
- establishing the zero-point (23) of the tool by calibrating to a calibration feature of a spindle carrying the adapter;
- calculating the differences between the coordinates of the zero-point (23) of the tool based on the calibration feature of the spindle and the coordinates of the established zero-point (23) of the tool based on the calibration feature (24) of the adapter;
- outputting a message, in case one of the differences exceeds a predefined range.

6. Method according to claim 4 or 5, **characterized in that** it furthermore comprises the following steps for checking the accuracy of the calibration of the measuring arrangement:
- selecting one or multiple further geometrical characteristics of the calibration feature (24), whose properties are known;
- measuring the properties of the chosen characteristics of the calibration feature (24);
- comparing the measured properties with the known properties of the characteristics,
- outputting a message, in case the measured property of at least one of the characteristics differs from the known property of the appropriate characteristic to more that a predefined allowed range.

7. Method according to one of the claims 4 to 6, **characterized in that** it furthermore comprises the following steps for checking the rotation speed of an adapter forming the tool holder:
- measuring of the rotation speed of a manually rotated spindle carrying the adapter;
- outputting a message, in case the measured rotation speed exceeds a predefined range for a maximum allowed rotation speed.

8. Method according to one of the claims 4 to 7, **characterized in that** it furthermore comprises the following steps for determining of a rotational position of an adapter forming the tool holder:
- permanent measuring of the rotational position of a spindle carrying the adapter;
- manual rotating of the spindle and the adapter mounted therein from a first rotational position to a second rotational position;
- manual rotating of the spindle and the adapter mounted therein from the second rotational position towards the first rotational position;
- outputting a message, in case the first rotational position is measured again.

## Revendications

1. Un porte-outil pour recevoir un outil à mesurer dans une configuration de mesure, comprenant:
- un corps de base (20) fixable dont l'axe de symétrie (22) définit un axe vertical du porte-outil ;
- un point d'origine de l'outil (23) qui est défini pour l'outil à recevoir dans le porte-outil et
- un repère d'étalonnage (24) qui présente une distance horizontale et une distance verticale par rapport au point d'origine de l'outil (23) et présente dans un plan vertical contenant le point d'origine de l'outil (23) un bord extérieur (38) en arc de cercle formant le profil dont l'angle au centre est supérieur à 135°, la forme en arc circulaire du bord extérieur (38) formant le profil coupant une droite (42) comprenant un rayon horizontal de la forme en arc de cercle dans un premier point d'intersection et une droite (43) comprenant un rayon vertical de la forme en arc de cercle dans un deuxième point d'intersection ;
**caractérisé en ce que** la forme en arc de cercle du bord extérieur formant le profil est constituée par un demi-cercle (38) dont l'axe de symétrie (44) est à chaque fois au minimum de 10° par rapport au rayon horizontal et par rapport au rayon vertical.

2. Porte-outil selon la revendication 1 **caractérisé en ce que** le repère d'étalonnage est formé d'une bille qui est pour moitié encastrée dans une surface (26) du porte-outil, qui est inclinée à 45° vers un rayon horizontal de la forme en arc de cercle du bord extérieur (38) formant le profil.

3. Ordre de mesure pour mesurer des outils, comprenant :
- un porte-outil selon la revendication 1 ou 2 qui est fixé avec son corps de base (20) dans la configuration de mesure, une rotation du porte-outil autour de son axe de symétrie (22) étant rendue possible et
- un moyen de mesure optique pour mesurer l'outil à recevoir par le porte-outil.

4. Procédé pour étalonner une configuration de mesure selon la revendication 3 au point de référence d'outil (23), comprenant les étapes suivantes:
- saisie d'une mesure d'étalonnage horizontale prédéfinie qui représente la distance horizontale du repère d'étalonnage (24) au point d'origine d'outil (23) ;
- saisie d'une mesure d'étalonnage verticale prédéfinie qui représente la distance verticale du repère d'étalonnage (24) au point d'origine d'outil (23) ;
- orientation du moyen de mesure optique sur le repère d'étalonnage (24) ;
- orientation d'un axe (37) optique du moyen de mesure optique sur le point central de la forme en arc de cercle du bord extérieur (38) formant le profil du repère d'étalonnage (24) ;
- calcul d'une position horizontale et d'une position verticale du point central de la forme en arc de cercle du repère d'étalonnage (24) à partir de valeurs de mesure du bord extérieur (38) formant le profil optiquement identifié ;
- calcul d'une origine de coordonnées représentant le point d'origine de l'outil (23) par formation d'une différence entre la position horizontale du point central de la forme en arc de cercle du repère d'étalonnage (24) et la mesure d'étalonnage horizontale ainsi que d'une différence entre la position verticale du point central de la forme en arc de cercle du repère d'étalonnage (24) et de la mesure d'étalonnage verticale.

5. Procédé selon la revendication 4 **caractérisé en ce qu'**il comprend en outre les étapes suivantes pour le contrôle de la plausibilité de la mesure d'étalonnage horizontale prédéfinie et de la mesure d'étalonnage verticale prédéfinie d'un adaptateur formant le porte-outil :
- détermination du point d'origine d'outil (23) par l'étalonnage sur un repère d'étalonnage d'une broche recevant l'adaptateur ;
- calcul des différences entre les coordonnées du point d'origine d'outil (23) déterminé à partir du repère d'étalonnage de la broche et les coordonnées du point d'origine d'outil (23) déterminé à partir du repère d'étalonnage (24) de l'adaptateur ;
- édition d'un message si une des différences dépasse une mesure admise prédéfinie.

6. Procédé selon la revendication 4 ou 5 **caractérisé en ce qu'**il comprend en outre les étapes suivantes pour le contrôle de l'exactitude de l'étalonnage de la configuration de mesure :
- sélection d'un ou plusieurs autres repères géométriques du repère d'étalonnage (24) dont les propriétés sont préalablement connues ;
- mesure des propriétés des caractéristiques sélectionnées du repère d'étalonnage (24) ;
- comparaison des propriétés des caractéristiques sélectionnées du repère d'étalonnage (24)
- édition d'un message si la propriété mesurée d'au moins une des caractéristiques s'écarte de plus d'une mesure admise prédéfinie de la propriété préalablement connue de celle correspondante des caractéristiques.

7. Procédé selon la revendication 4 à 6 **caractérisé en ce qu'**il comprend en outre les étapes suivantes pour le contrôle du nombre de tours d'un adaptateur formant le porte-outil :
- mesure du nombre de tours d'une broche tournée manuellement recevant l'adaptateur ;
- édition d'un message si le nombre de tours mesuré dépasse une mesure prédéfinie pour un nombre de tours maximum admis.

8. Procédé selon la revendication 4 à 7 **caractérisé en ce qu'**il comprend en outre les étapes suivantes pour la détermination d'une position rotative d'un adaptateur formant le porte-outil :
- mesure permanente de la position rotative d'une broche recevant l'adaptateur ;
- rotation manuelle de la broche et de l'adaptateur réceptionné dans celle-ci d'une première position rotative dans une deuxième position rotative ;
- rotation manuelle de la broche et de l'adaptateur réceptionné dans celle-ci de la deuxième position rotative dans la direction de la première position rotative ;
- édition d'un message si la première position rotative est à nouveau mesurée.
